Europäisches Patentamt

European Patent Office

Office européen des brevets

(11) Publication number: **0 083 927**

A1

## (12) EUROPEAN PATENT APPLICATION

(21) Application number: **83100038.5**

(22) Date of filing: **04.01.83**

(51) Int. Cl.³: **F 16 H 53/02**
**F 01 L 1/04**

(30) Priority: **13.01.82 JP 3967/82**

(43) Date of publication of application:
**20.07.83 Bulletin 83/29**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(72) Inventor: **Hayashi, Yoshimasa**
**No. 4-6-1, Yukinoshita**
**Kamakura City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Engine camshaft.

(57) A camshaft has a shaft portion (10) that is cast in light metal and a plurality of hollow cam portions (12) that are made of ferrous metal and embedded in the shaft portion (10).

*FIG.2*

EP 0 083 927 A1

ENGINE CAMSHAFT

## BACKGROUND OF THE INVENTION

### 1. Field of the Invention

The present invention relates to engine camshafts, particularly for automobiles.

### 2. Description of the Prior Art

Most automotive camshafts are made from hardenable alloy cast iron, while some heavy duty engine camshafts are made of steel by forging. Either cast or forged, they are entirely made of ferrous metal and formed as one piece with lobes or cams, bearing journals, etc.

For attainment of a light automotive engine, a light camshaft is quite desirable. However, no camshaft has been proposed that satisfies the requirements for both the weight and the strength.

## SUMMARY OF THE INVENTION

In accordance with the present invention, there is provided a camshaft comprising a shaft portion that is cast in light metal and a plurality of cam portions that are made of ferrous metal and embedded in the shaft portion.

In accordance with the present invention, there is also provided with a method of producing a camshaft,

-1-

comprising the steps of preparing a plurality of independent cams that are hollow and made of ferrous metal, preparing a mold for casting a shaft on which the cams are to be mounted, setting the cams in the mold, and pouring a mass of light metal into the mold to cast the shaft in the mold while allowing the cams to be embedded in the shaft when the mass of light metal becomes solid.

In the above camshaft and the method of producing same, the shaft has a plurality of journal portions that are plated with hard chromium or provided with sleeves made of metal with a good resistance to wear and embedded in the shaft or treated by the participation hardening.

With the above camshaft and the method of producing same, the shaft that constitutes the greater part of the camshaft can be made of light metal, while the cams and journal portions can be made of suitable materials other than the light metal or the journal portions can be base hardened in a suitable way, thus enabling the camshaft to be considerably reduced in weight while retaining the strength required as well as providing a good resistance to both lifter wear and bearing wear.

It is accordingly an object of the present invention to provide an engine camshaft that is considerably lighter than the comparable prior art camshaft while

-2-

retaining the strength required as well as providing a good resistance to both lifter and bearing wear.

It is another object of the present invention to provide a camshaft of the above described character that is particularly suited for adoption to an automotive engine and quite effective for the reduction in weight of the automotive engine.

## BRIEF DESCRIPTION OF THE DRAWINGS

The features and advantages of the camshaft according to the present invention will become more clearly appreciated from the following description taken in conjunction with the accompanying drawings, in which:

Fig. 1 is a sectional view of an automotive engine camshaft according to an embodiment of the present invention;

Fig. 2 is a fragmentary side elevation, partly in section, of the camshaft of Fig. 1;

Fig. 3 is a perspective view of a cam incorporated in the camshaft of Fig. 1;

Fig. 4 is a sectional view of an automotive engine camshaft according to another embodiment of the present invention; and

Fig. 5 is a heat treatment diagram along which the camshaft of the present invention is cooled and annealed after the pouring.

DESCRIPTION OF THE PREFERRED EMBODIMENTS

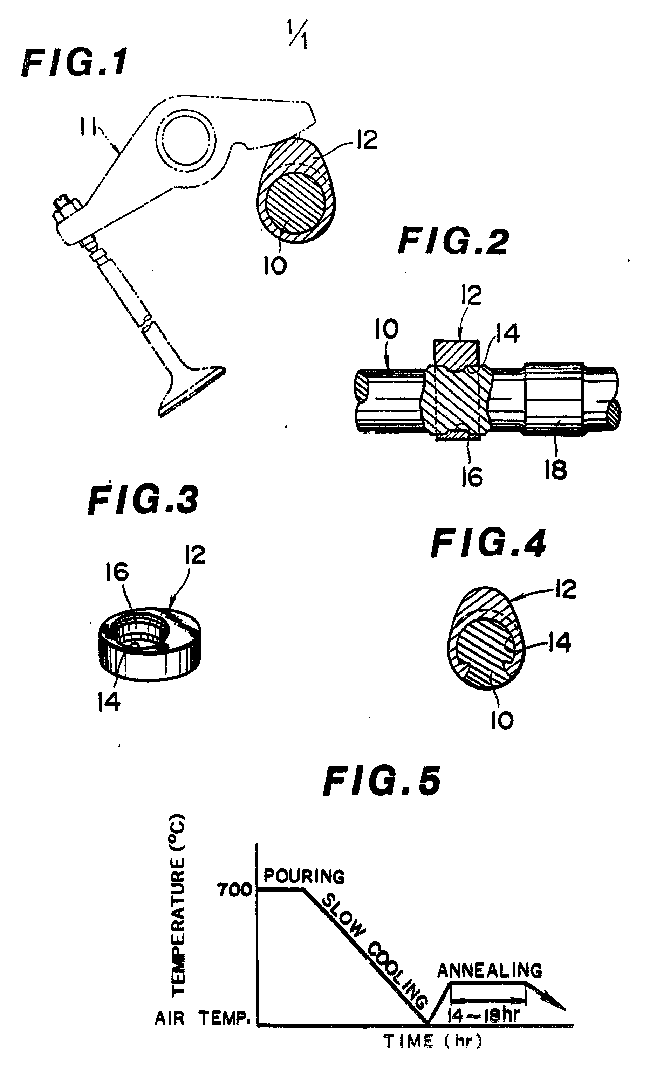

Referring to Figs. 1 to 3, the camshaft according to an embodiment of the present invention is shown incorporated in an automotive engine valve train 11 and consists of a shaft 10 that is cast in an aluminium alloy and a plurality of cams, though only one is shown, that are made of ferrous metal and embedded in the shaft 10 at predetermined positions thereon by casting the shaft 10 extending through the cams 12.

The cam 12 that may be either cast or forged in a way similar to the prior art camshaft is prepared prior to the casting of the shaft 10 and formed into an annular shape with an opening 14 into which a mass of aluminium alloy that forms part of the shaft 10 is poured during the casting operation. In order to provide a good resistance to wear, the cam 12 is hardened by the chill or induction hardening process. At this inner circumference defining the opening 14, the cam 12 is formed with a projection 16 that is embedded in the shaft 10 to provide a firm joint between the cam 12 and the shaft 10.

In forming the camshaft, the cams 12 are first prepared by casting or forging and hardened to have a good resistance to lifter wear, though the cams can be induction hardened after the casting of the shaft.

0083927

The cams 12 are then set in a mold and afterwards a mass of aluminium alloy is poured into the mold and allowed to be cooled.  When the mass of aluminium alloy becomes solid, the cams 12 are firmly and integrally secured to the shaft 10.

Various light metals may be used for the shaft 10.  In this connection, it is desirable to use such light metal that has a large strength at the higher temperatures but a small coefficient of expansion, as well as providing a good resistance to wear, as for example an aluminium alloy with 12w/o Si, 2.5w/o Ni, 1.2w/o Mg and 0.8w/o Cu (W/o is per cent by weight). This aluminium alloy is poured at the temperature of about 700 to 730$^{o}$C, and after the pouring it is slowly cooled and then annealed for a suitable time as shown in the heat treatment diagram of Fig. 5.  In this instance, it is to be noted that by using such aluminium alloy whose silicon content is within the range of 11.7 to 25w/o, the pouring can be performed at a temperature lower than the transformation temperature (about 800$^{o}$C) of the ferrous material forming the cams 12, thus eliminating the possibility that the chilled or quenched cams 12 are annealed to reduce in hardness during the casting operation.  Only the work that the cams 12 require after the casting of the shaft 10 is to be groud to

-5-

be finished.

As shown in Fig. 2, the shaft 10 has a plurality of journal portions 18, though only one is shown. The journal portion 18 is given a good resistance to bearing wear by being plated with hard chromium or allowing Silicon to participate adjacent the surface. The journal portion 18 may otherwise be provided with a sleeve that is made of suitable material such as ferrous metal or phospher bronz to have a good resistance to bearing wear. The sleeve is embedded in the shaft 10 in the same way as the cams 12.

With the foregoing camshaft structure, the shaft 10 that constitutes the greater part of the camshaft can be made of light metal, while the cams 12 and journal portions 18 can be made of suitable materials other than the light metal or the journal portions 18 can be case hardened in a suitable way, thus enabling the camshaft to be considerably reduced in weight while retaining the strength required as well as providing a good resistance to both lifter wear and bearing wear.

Referring to Fig. 4, this embodiment intends to further reduce the weight of the camshaft by reducing the amount of ferrous metal used. To attain this end, the cam 12 is partially cut off at its base portion so that part of the base portion is made of alluminium alloy. Since the cam lobe portion is not subjected to a large force and therefore does not require a large surface hardness, this embodiment can successfully further reduce the weight, as well as producing the same effect as the previous embodiment.

Obviously, numerous modifications and variations of the present invention are possible in light of the above teachings. It is therefore to be understood that within the scope of the appended claims, the invention may be practiced otherwise than as specifically described.

WHAT IS CLAIMED IS:

1.   A camshaft comprising a shaft (10) cast in light metal and a plurality of hollow cams (12) made of ferrous metal and embedded in said shaft (10).

2.   A camshaft as set forth in claim 1, in which said cams (12) are ring-shaped to have an opening (14) through which said cast shaft (10) extends.

3.   A camshaft as set forth in claim 2, in which each of said cams (12) is formed at its inner circumference defining said opening (14), with a projection (16) that is embedded in said shaft to provide a firm joint between each of said cams and said shaft.

4.   A camshaft as set forth in claim 1, in which said light metal is alluminium alloy.

5.   A camshaft as set forth in claim 1, in which said shaft (10) has a plurality of journal portions (18) that are plated with hard chromium.

6.   A camshaft as set forth in claim 1, in which said shaft (10) has a plurality of journal portions (18) that are provided with sleeves made of metal with a good resistance to wear and embedded in said cast shaft (10).

7. A camshaft as set forth in claim 4, in which said shaft (10) has a plurality of journal portions (18) that are treated by the participation hardening.

8. A method of producing a camshaft, comprising the steps of preparing a plurality of independent cams (12) that are hollow and made of ferrous metal, preparing a mold for casting a shaft (10) on which said cams are to be mounted, setting said cams in said mold, and pouring a mass of light metal into said mold to cast said shaft (10) in said mold while allowing said cams (12) to be embedded in said shaft (10) when said mass of light metal becomes solid.

**FIG.1**

11

12

10

**FIG.2**

10    12    14

16    18

**FIG.3**

16    12

14

**FIG.4**

12

14

10

**FIG.5**

TEMPERATURE (°C)

POURING

700

SLOW COOLING

ANNEALING

14～18hr

AIR TEMP.

TIME (hr)

0083927

European Patent
Office

EUROPEAN SEARCH REPORT

Application number

EP 83 10 0038

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 838 995  (TOYOTA) | 1 | F 16 H  53/02 |
| A | GB-A-1 117 816  (GKN) | 1 | F 01 L   1/04 |
| A | FR-A- 817 382  (RENAULT) | 1,8 | |
| A | FR-A-1 099 794  (LIPP) | 1,8 | |
| A | US-A-2 107 747  (CAMPBELL) | 1,8 | |
| A | FR-A- 750 015  (FICHTEL) | 8 | |

TECHNICAL FIELDS
SEARCHED (Int. Cl. ³)

F 16 H  53/00
F 01 L   1/00
B 22 D  19/00
F 16 C   3/00

The present search report has been drawn up for all claims

| Place of search | Date of completion of the search | Examiner |
|---|---|---|
| THE HAGUE | 06-04-1983 | FLORES E. |